# EUROPEAN PATENT APPLICATION

(11) **EP 4 772 823 A1**
(43) Date of publication of application: **08.07.2026**
(21) Application number: 24859380.8
(22) Date of filing: 06.08.2024
(51) Int. Cl.: F28D 7/10, F23D 14/22, F23D 14/66, F28F 21/04

(54) **HEAT EXCHANGER AND BURNER**

(30) Priority: 30.08.2023 JP 2023140450
(71) Applicant: NGK Insulators, Ltd., Nagoya-shi, Aichi 467-8530 (JP)
(72) Inventor: KAWAGUCHI,Tatsuo, Nagoya-shi, Aichi 467-8530 (JP); IWASAKI,Shinnosuke, Nagoya-shi, Aichi 467-8530 (JP)
(74) Representative: MERH-IP Matias Erny Reichl Hoffmann Patentanwälte PartG mbB
(86) International application number: PCT/JP2024/028123
(87) International publication number: WO 2025/047340

(57) **Abstract**

A heat exchanger includes a honeycomb structure 100 having an outer peripheral wall 10, a first intermediate wall 20, a second intermediate wall 30, a first partition wall 40, a second partition wall 50, and a third partition wall 60. The first intermediate wall 20 and the second intermediate wall 30 each include a portion provided on an inner side of the outer peripheral wall 10. The first partition wall 40 is provided on an inner side of the first intermediate wall 20 and defines a plurality of cells 70a to form a flow path for a first fluid. The second partition wall 50 is provided between the first intermediate wall 20 and the second intermediate wall 30 and defines a plurality of cells 70b to form a flow path for a second fluid. The third partition wall 60 is provided between the second intermediate wall 30 and the outer peripheral wall 10 and defines a plurality of cells 70c to form a flow path for a third fluid. The flow path for the first fluid (cells 70a), the flow path for the second fluid (cells 70b), and the flow path for the third fluid (cells 70c) are coaxially positioned .

## Description

### FIELD OF THE INVENTION

This invention relates to a heat exchanger and a burner.

### BACKGROUND OF THE INVENTION

Heat exchangers that preheat combustion air and steam using heat sources such as exhaust gas have been introduced into various products. Devices having such heat exchangers can achieve the effect of reducing energy consumption because they reuse thermal energy that would otherwise be waste heat.

For example, burners that are used as a heating source for industrial furnaces and the like and that recover exhaust heat by performing heat exchange between combustion air and exhaust gas (referred to as "recuperative burners" or "radiant tube burners") are known (Patent Literatures 1 and 2). Such burners are provided with a heat exchanger outside a flow path through which a fuel gas flows, the heat exchanger being configured to recover heat from exhaust gas and preheat combustion air.

The heat exchanger used in the burner performs heat exchange between gases. In the heat exchange between gases, the heat transfer coefficient is lower than in heat exchange between a liquid and a gas, so that it is necessary to increase the surface area by providing fins or the like in the flow paths of the respective gases.

However, if fins or the like are provided in the flow paths of the respective gases to increase the surface area, the size of the heat exchanger becomes large. In addition, fins provided in the flow paths of heat exchangers used in conventional burners are often formed from heat-resistant metals such as stainless steel, but their heat resistance cannot be said to be sufficient. In particular, in order to enhance the energy efficiency of the burner, it is effective to increase the temperature of the exhaust gas flowing into the heat exchanger to increase the temperature of the combustion air. However, from the viewpoint of the heat resistance of heat-resistant metals, the temperature of the exhaust gas has to be limited to 1000°C or lower. Therefore, conventional burners could only be applied to industrial furnaces used in a relatively low temperature range where the furnace internal temperature is 1000°C or lower.

On the other hand, a ceramic structure having a predetermined flow path structure has been proposed as a heat exchange member effective for heat exchange between gases (Patent Literature 3).

However, although the heat exchange member of Patent Literature 3 has good heat resistance because it has ceramics as a main component, it does not have a structure suitable for use in burners because it is mainly used in automobile exhaust systems.

### PRIOR ART

### Patent Literatures

[Patent Literature 1] Japanese Patent Application Publication No. H07-208708 A
[Patent Literature 2] Japanese Patent Application Publication No. 2016-142443 A
[Patent Literature 3] Japanese Patent Application Publication No. 2015-42934 A

### SUMMARY OF THE INVENTION

### Problem to be Solved by the Invention

This invention has been made to solve the above problems, and an object of this invention is to provide a heat exchanger that has improved heat resistance and heat exchange efficiency and that can be used in burners. Another object of this invention is to provide a burner that has high energy efficiency and that can be applied to industrial furnaces used in a temperature range where a furnace internal temperature exceeds 1000°C.

### Means for Solving the Problem

As a result of intensive studies on honeycomb structures having ceramics as a main component, the present inventors have found that the above problems can be solved by providing an outer peripheral wall, a first intermediate wall, a second intermediate wall, a first partition wall, a second partition wall, and a third partition wall such that three flow paths are coaxially positioned, and complete this invention. That is, this invention is exemplified as follows:
<1> A heat exchanger including a honeycomb structure having ceramics as a main component, the honeycomb structure including:
   an outer peripheral wall;
      a first intermediate wall and a second intermediate wall, each including a portion disposed inside the outer peripheral wall;
      a first partition wall provided on an inner side of the first intermediate wall, the first partition wall defining a plurality of cells to form a first flow path;
      a second partition wall provided between the first intermediate wall and the second intermediate wall, the second partition wall defining a plurality of cells to form a second flow path; and
      a third partition wall provided between the second intermediate wall and the outer peripheral wall, the third partition wall defining a plurality of cells to form a third flow path,
   wherein the first flow path, the second flow path, and the third flow path are configured to be coaxially positioned.
<2> The heat exchanger according to <1 >, wherein the first flow path may be a flow path for a first fluid, the second flow path may be a flow path for a second fluid, and the third flow path may be a flow path for a third fluid,
   and heat may be exchangeable between the second fluid and the third fluid.
<3> The heat exchanger according to <1>, wherein the first flow path and the second flow path may be flow paths for a first fluid, and the third flow path may be a flow path for a third fluid,
   and heat may be exchangeable between the first fluid and the third fluid.
<4> The heat exchanger according to any one of <1> to <3>, wherein in an axial direction of the honeycomb structure, both end portions of the outer peripheral wall may be positioned more inward than both end portions of the first intermediate wall and the second intermediate wall.
<5> The heat exchanger according to any one of <1> to <4>, wherein in a cross section perpendicular to an extending direction of the cells, the second partition wall and the third partition wall may each have a circumferential partition wall extending in a circumferential direction and a radial partition wall extending in a radial direction.
<6> The heat exchanger according to any one of <1> to <5>, which may further include an outer cylindrical member fitted to at least a part of the outer peripheral wall, the outer cylindrical member having an inlet and an outlet for a fluid.
<7> The heat exchanger according to any one of <1> to <6>, wherein the first intermediate wall may be an inner peripheral wall, and an inner side of the inner peripheral wall may be a hollow region that does not have the first partition wall.
<8> The heat exchanger according to <7>, which may further include an inner cylindrical member fitted to at least a part of the inner peripheral wall, the inner cylindrical member having an inlet and an outlet for a fluid.
<9> The heat exchanger according to <2>, wherein a flow direction of the first fluid and a flow direction of the second fluid may be opposite to a flow direction of the third fluid.
<10> The heat exchanger according to <3>, wherein a flow direction of the first fluid flowing through the first flow path and a flow direction of the first fluid flowing through the second flow path may be opposite to each other.
<11> The heat exchanger according to <10>, wherein a flow direction of the first fluid flowing through the second flow path and a flow direction of the third fluid flowing through the third flow path may be opposite to each other.
<12> The heat exchanger according to <11>, which may further include a return member provided on one end face of the honeycomb structure orthogonal to the extending direction of the cells, the return member being configured to feed the first fluid flowing through the second flow path to the first flow path.
<13> The heat exchanger according to any one of <1> to <12>, wherein the ceramics may be silicon carbide.
<14> A burner for mixing and combusting a fuel gas and air, the burner including:
   the heat exchanger according to <2>, wherein the first fluid is the fuel gas, the second fluid is the air, and the third fluid is a combustion exhaust gas from the fuel gas and the air.
<15> A burner for mixing and combusting a fuel gas and air, the burner including:
   the heat exchanger according to <3>,
   wherein the first fluid is the air and the third fluid is a combustion exhaust gas from the fuel gas and the air,
   and the heat exchanger is used for preheating the air.

### Effects of Invention

According to this invention, it is possible to provide a heat exchanger that has improved heat resistance and heat exchange efficiency and that can be used in burners. Also, according to this invention, it is possible to provide a burner that has high energy efficiency and that can be applied to industrial furnaces used in a temperature range where a furnace internal temperature exceeds 1000°C.

### BRIEF DESCRIPTION OF THE DRAWINGS

FIG. 1a is a cross-sectional view of a heat exchanger according to Embodiment 1 of this invention, the cross-sectional view being parallel to the extending direction of the cells of the honeycomb structure;
FIG. 1b is a cross-sectional view taken along the line a-a' in FIG. 1a;
FIG. 2 is a cross-sectional view of another heat exchanger according to Embodiment 1 of this invention, the cross-sectional view being parallel to the extending direction of the cells of the honeycomb structure;
FIG. 3 is a cross-sectional view of another heat exchanger according to Embodiment 1 of this invention, the cross-sectional view being parallel to the extending direction of the cells of the honeycomb structure;
FIG. 4 is a cross-sectional view of another heat exchanger according to Embodiment 1 of this invention, the cross-sectional view being parallel to the extending direction of the cells of the honeycomb structure;
FIG. 5a is a cross-sectional view of a heat exchanger according to Embodiment 2 of this invention, the cross-sectional view being parallel to the extending direction of the cells of the honeycomb structure;
FIG. 5b is a cross-sectional view taken along the line b-b' in FIG. 5a;
FIG. 6 is a cross-sectional view of another heat exchanger according to Embodiment 2 of this invention, the cross-sectional view being parallel to the extending direction of the cells of the honeycomb structure;
FIG. 7a is a cross-sectional view of a heat exchanger according to Embodiment 3 of this invention, the cross-sectional view being parallel to the extending direction of the cells of the honeycomb structure;
FIG. 7b is a cross-sectional view of another heat exchanger according to Embodiment 3 of this invention, the cross-sectional view being parallel to the extending direction of the cells of the honeycomb structure;
FIG. 8a is a cross-sectional view of another heat exchanger according to Embodiment 3 of this invention, the cross-sectional view being parallel to the extending direction of the cells of the honeycomb structure; and
FIG. 8b is a cross-sectional view of another heat exchanger according to Embodiment 3 of this invention, the cross-sectional view being parallel to the extending direction of the cells of the honeycomb structure.

### DETAILED DESCRIPTION OF THE INVENTION

Hereinafter, embodiments of the invention will be specifically described with reference to the drawings. It should be understood that the invention is not limited to the following embodiments, and those which have appropriately added changes, improvements and the like to the following embodiments based on knowledge of a person skilled in the art without departing from the spirit of the invention fall within the scope of the invention.

### <Embodiment 1>

### (1) Heat Exchanger

The heat exchanger according to Embodiment 1 of this invention includes a honeycomb structure having ceramics as a main component. By using a honeycomb structure having ceramics as a main component, heat resistance can be improved.

As used herein, "having ceramics as a main component" means that a proportion of ceramics in all components is 50% by mass or more.

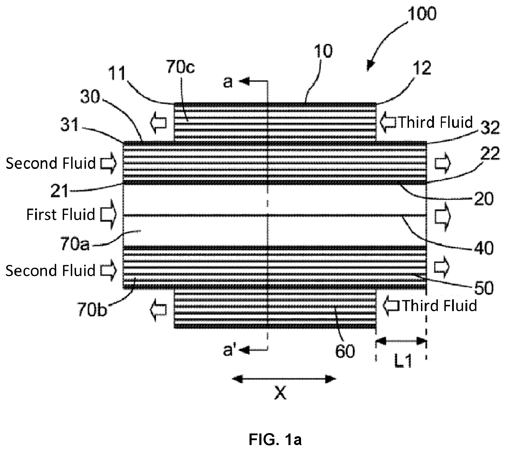

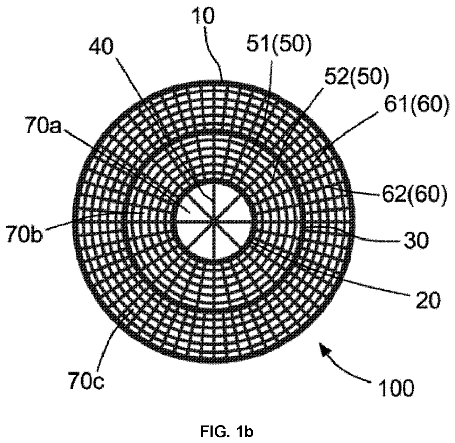

FIG. 1a is a cross-sectional view of a heat exchanger according to Embodiment 1 of this invention, the cross-sectional view being parallel to the extending direction of the cells of the honeycomb structure. FIG. 1b is a cross-sectional view taken along the line a-a' in FIG. 1a (a cross-sectional view of the heat exchanger perpendicular to the extending direction of the cells of the honeycomb structure).

As shown in FIGS. 1a and 1b, the heat exchanger according to Embodiment 1 of this invention includes a honeycomb structure 100 having an outer peripheral wall 10, a first intermediate wall 20, a second intermediate wall 30, a first partition wall 40, a second partition wall 50, and a third partition wall 60. The first intermediate wall 20 and the second intermediate wall 30 each include a portion provided on an inner side of the outer peripheral wall 10. The first partition wall 40 is provided on an inner side of the first intermediate wall 20 and defines a plurality of cells 70a to form a first flow path. The second partition wall 50 is provided between the first intermediate wall 20 and the second intermediate wall 30 and defines a plurality of cells 70b to form a second flow path. The third partition wall 60 is provided between the second intermediate wall 30 and the outer peripheral wall 10 and defines a plurality of cells 70c to form a third flow path. The first flow path (cells 70a), the second flow path (cells 70b), and the third flow path (cells 70c) are coaxially positioned. In this heat exchanger, the first flow path is a flow path for a first fluid, the second flow path is a flow path for a second fluid, and the third flow path is a flow path for a third fluid. By using the honeycomb structure 100 having such a structure, heat is exchangeable between the second fluid and the third fluid, and the heat exchange efficiency can be enhanced, so that it is possible to suitably use the honeycomb structure in burners.

Since the first flow path, the second flow path, and the third flow path are coaxially positioned, the outer peripheral wall 10, the first intermediate wall 20, and the second intermediate wall 30 that form those flow paths are also positioned coaxially. Therefore, in a cross section perpendicular to the extending direction of the cells 70a, 70b, 70c, the first intermediate wall 20 and the second intermediate wall 30 extend in a circumferential direction similarly to the outer peripheral wall 10.

Since the outer peripheral wall 10 is a portion serving as an outer surface of the honeycomb structure 100, from a viewpoint of enhancing resistance to external impacts, the outer peripheral wall 10 preferably has a greater thickness than partition walls (the first partition wall 40, the second partition wall 50, and the third partition wall 60) making up the honeycomb structure 100. Specifically, the thickness of the outer peripheral wall 10 is preferably 1.2 to 15 times the thickness of the partition walls, and more preferably 1.5 to 10 times. By controlling the outer peripheral wall 10 to have such a thickness, it is possible to improve resistance to external impacts and the like.

The thickness of the outer peripheral wall 10 is not particularly limited, but it may preferably be 0.1 to 10 mm, and more preferably 0.5 to 3 mm.

In an axial direction X of the honeycomb structure 100, both end portions (end portions 11, 12) of the outer peripheral wall 10 are preferably positioned more inward than both end portions of the first intermediate wall 20 and the second intermediate wall 30 (end portions 21, 22 of the first intermediate wall 20 and end portions 31, 32 of the second intermediate wall 30). By positioning both end portions of the outer peripheral wall 10 at such positions, it becomes easier to provide an inlet and an outlet for the third fluid flowing between the outer peripheral wall 10 and the second intermediate wall 30 so as to avoid the flows of the first fluid and the second fluid.

A distance L1 between each end portion of the outer peripheral wall 10 and each end portion of the first intermediate wall 20 and the second intermediate wall 30 may be appropriately adjusted according to the overall size of the honeycomb structure 100, and it may preferably be 2 to 150 mm, and more preferably 5 to 50 mm. By controlling the distance L1 in this manner, it becomes easier to stably ensure the effects as described above.

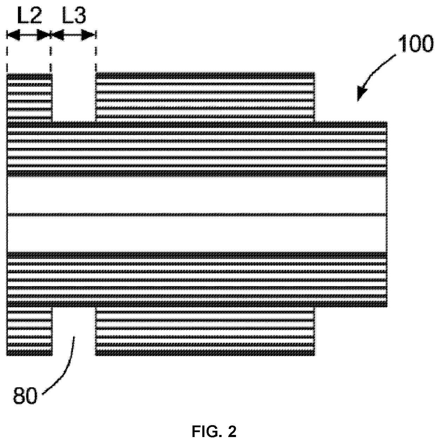

As shown in FIG. 2, in the axial direction X of the honeycomb structure 100, a constricted portion 80 may be formed by partially not providing the outer peripheral wall 10 and the third partition wall 60. Even when the constricted portion 80 is formed, it becomes easier to provide an inlet and an outlet for the third fluid flowing between the outer peripheral wall 10 and the second intermediate wall 30 so as to avoid the flows of the first fluid and the second fluid.

FIG. 2 is a cross-sectional view of the heat exchanger parallel to the extending direction of the cells 70a, 70b, 70c of the honeycomb structure 100.

The position of the constricted portion 80 may be appropriately adjusted according to the overall size of the honeycomb structure 100, and a distance L2 from the end portions 11, 12 of the outer peripheral wall 10 to the constricted portion 80 is preferably 2 to 100 mm, and more preferably 5 to 50 mm. A length L3 of the constricted portion 80 is preferably 3 to 100 mm, and more preferably 5 to 50 mm.

The first intermediate wall 20 is a wall existing between the first flow path and the second flow path. The second intermediate wall 30 is a wall existing between the second flow path and the third flow path. Therefore, the first intermediate wall 20 preferably has a thickness such that the respective fluids flowing through the first flow path and the second flow path do not mix, and the second intermediate wall 30 preferably has a thickness such that the respective fluids flowing through the second flow path and the third flow path do not mix. Specifically, the thicknesses of the first intermediate wall 20 and the second intermediate wall 30 are preferably greater than the thicknesses of the partition walls (the first partition wall 40, the second partition wall 50, and the third partition wall 60) making up the honeycomb structure 100, more preferably 1.2 to 15 times the thicknesses of the partition walls, and even more preferably 1.5 to 10 times. By controlling the first intermediate wall 20 and the second intermediate wall 30 to have such thicknesses, it is possible to enhance pressure resistance and suppress mixing of the respective fluids.

The thicknesses of the first intermediate wall 20 and the second intermediate wall 30 are not particularly limited, but they may preferably be 0.1 to 10 mm, and more preferably 1 to 5 mm.

In a cross section perpendicular to the extending direction of the cells 70a, 70b, 70c, the second partition wall 50 and the third partition wall 60 have circumferential partition walls 51, 61 extending in a circumferential direction and radial partition walls 52, 62 extending in a radial direction. By providing the circumferential partition walls 51, 61 and the radial partition walls 52, 62, heat conductivity in a radial direction is improved, so that a heat exchange efficiency between fluids flowing through the second flow path and the third flow path can be enhanced.

The thicknesses of the partition walls (the first partition wall 40, the second partition wall 50, and the third partition wall 60) are not particularly limited, but they may preferably be 0.1 to 1 mm, more preferably 0.2 to 0.5 mm. By controlling the thicknesses of the partition walls within this range, it is possible to enhance mechanical strength and heat exchange efficiency while suppressing pressure loss of the respective fluids.

In a cross section perpendicular to the extending direction of the cells 70a, 70b, 70c, a ratio of a cross-sectional area of the second flow path to a cross-sectional area of the third flow path is preferably 1:10 to 10:1, and more preferably 1:2 to 2:1. By controlling the cross-sectional areas of the flow paths within such a range, it is possible to enhance a heat exchange efficiency between fluids flowing through the second flow path and the third flow path.

The cell density of each flow path (that is, the number of cells per unit cross-sectional area of each flow path) is not particularly limited, and may be appropriately set according to the thickness of each partition wall and the like from a viewpoint of structural strength of the honeycomb structure 100.

The total number of cells in the honeycomb structure 100 is not particularly limited, but it may preferably be 16 to 10,000, and more preferably 50 to 2,000.

The cross section of the honeycomb structure 100 perpendicular to the axial direction X (the extending direction of the cells 70a, 70b, 70c) is not limited to a circular shape as shown in FIG. 1b, and may be an elliptical shape, an oval shape in which arcs are combined, a quadrangular shape, or other polygonal prismatic shape. When this cross section is circular, the diameter thereof is not particularly limited, but it may preferably be 300 mm or less, and more preferably 200 mm or less.

In the cross section perpendicular to the extending direction of each cell (cells 70a, 70b, 70c), the shape of each cell can be various shapes such as a circular shape, an elliptical shape, a triangular shape, a quadrangular shape, a hexagonal shape, and other polygonal shapes. The shapes of the cells in the respective flow paths may be the same or different.

The honeycomb structure 100 preferably has a thermal conductivity of 100 W/(m·K) or more, more preferably 120 to 300 W/(m·K), and even more preferably 150 to 300 W/(m·K). By setting the thermal conductivity within this range, heat conductivity becomes good, and it is possible to enhance a heat exchange efficiency between fluids flowing through the second flow path and the third flow path.

Here, the thermal conductivity is measured by calculating a value at room temperature using values of thermal diffusivity measured by a light AC method, specific heat measured by a DSC (Differential Scanning Calorimetry) method, and density measured by an Archimedes method for a test piece cut out from the honeycomb structure 100.

The honeycomb structure 100 preferably has a high emissivity in a near-to-far infrared region. Specifically, the honeycomb structure 100 preferably has an emissivity at a wavelength of 2 to 20 µm of 30% or more, and more preferably 50% or more. By controlling the emissivity within this range, an effect of radiant heat transfer becomes good, and it is possible to enhance a heat exchange efficiency between fluids flowing through the second flow path and the third flow path.

Here, the emissivity is measured at 25°C using an existing emissivity measuring instrument.

As the ceramics used in the honeycomb structure 100, it is preferable to use ceramics having excellent heat resistance, and particularly, SiC (silicon carbide) is preferable in consideration of thermal conductivity and emissivity.

Even with SiC (silicon carbide), high thermal conductivity cannot be obtained in the case of a porous body. It is, therefore, preferable to form a dense body (Si-impregnated SiC) structure by impregnating with silicon during a production process of the honeycomb structure 100. High thermal conductivity can be obtained by forming a dense body structure. For example, in the case of a porous body of SiC (silicon carbide), the thermal conductivity is about 20 W/(m·K), but by forming a dense body, it can be about 150 W/(m·K).

Specific examples of ceramics used in the honeycomb structure 100 include, in addition to SiC and Si-impregnated SiC, (Si+Al)-impregnated SiC, metal composite SiC, recrystallized SiC, Si₃N₄, and the like, but from a viewpoint of heat exchange efficiency, it is preferable to use Si-impregnated SiC and (Si+AI)-impregnated SiC to form a dense body structure. Si-impregnated SiC has a structure in which surfaces of SiC particles are surrounded by a solidified material of a metallic silicon melt and SiC is integrally bonded through metallic silicon, so that silicon carbide is shielded from an atmosphere containing oxygen and oxidation can be prevented. Furthermore, SiC has characteristics of high thermal conductivity and easy heat dissipation, but SiC impregnated with Si exhibits high thermal conductivity and heat resistance while being densely formed and shows sufficient strength as a heat transfer member. That is, the honeycomb structure 100 made of a Si-SiC-based (Si-impregnated SiC, (Si+Al)-impregnated SiC) material exhibits excellent characteristics in heat resistance, thermal shock resistance, oxidation resistance, and corrosion resistance to acids, alkalis, and the like, and also exhibits high thermal conductivity.

The porosity of the intermediate walls (the first intermediate wall 20 and the second intermediate wall 30) and the partition walls (the first partition wall 40, the second partition wall 50, and the third partition wall 60) of the honeycomb structure 100 is not particularly limited, but it may preferably be 10% or less, and more preferably 3% or less. By controlling the porosity within such a range, it is possible to improve thermal conductivity.

The types of the first fluid, the second fluid, and the third fluid flowing through the first flow path, the second flow path, and the third flow path are not particularly limited, and various gases can be appropriately selected according to applications. In particular, when a heat exchanger including the honeycomb structure 100 is used in a burner, the first fluid is a fuel gas, the second fluid is air, and the third fluid is a combustion exhaust gas from the fuel gas and the air. Since the second flow path and the third flow path are composed of a plurality of cells 70b, 70c, it is possible to increase a contact area. In addition, since thermal conductivity of each of the respective partition walls and intermediate walls making up the cells 70b, 70c is also high, it is possible to improve the heat exchange efficiency.

It is preferable that flow directions of the first fluid and the second fluid in the honeycomb structure 100 are opposite to a flow direction of the third fluid. By controlling each fluid to have such flow directions, it is possible to improve heat exchange efficiency particularly between the second fluid and the third fluid.

The honeycomb structure 100 can be produced in accordance with a known method in the art. For example, the honeycomb structure 100 can be produced in accordance with a producing method as described below.

First, a green body containing ceramic powder is extruded into a desired shape to prepare a honeycomb formed body. At this time, by selecting dies and jigs having appropriate forms, it is possible to control the thicknesses of the outer peripheral wall 10, the respective intermediate walls (the first intermediate wall 20 and the second intermediate wall 30), and the respective partition walls (the first partition wall 40, the second partition wall 50, and the third partition wall 60), the shapes of the respective cells (70a, 70b, 70c), the cell density, and the like. For example, when producing a honeycomb formed body having the Si-impregnated SiC as a main component, a binder and water or an organic solvent are added to a predetermined amount of SiC powder, and the resulting mixture is kneaded to form a green body, which can be then formed into a honeycomb formed body having a desired shape.

Next, a part of the outer peripheral wall 10 and the third partition wall 60 is removed from the honeycomb formed body to obtain a desired shape. For example, when producing the honeycomb structure 100 having the structure shown in FIG. 1a, both end portion side regions of the outer peripheral wall 10 and the third partition wall 60 may be removed by grinding or the like. When forming the honeycomb structure 100 having the structure shown in FIG. 2, regions of the outer peripheral wall 10 and the third partition wall 60 that will become the constricted portion 80, and one end portion side region of the outer peripheral wall 10 and the third partition wall 60, may be removed by grinding or the like.

Next, the honeycomb formed body processed as described above is dried, and the honeycomb formed body is impregnated and fired with metallic Si under reduced pressure in an inert gas or in vacuum, whereby the honeycomb structure 100 can be obtained.

In the above description, the case where the processing for removing a part of the outer peripheral wall 10 and the third partition wall 60 is performed on the honeycomb formed body has been described, but such processing may be performed after firing the honeycomb formed body.

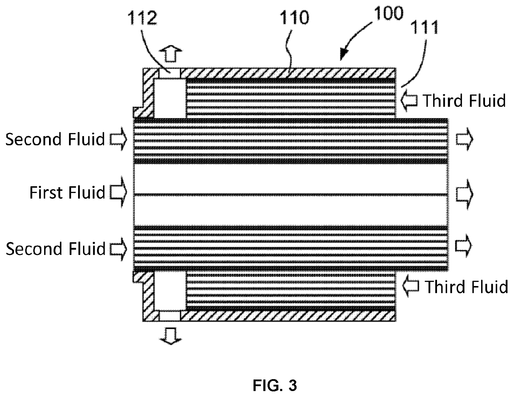

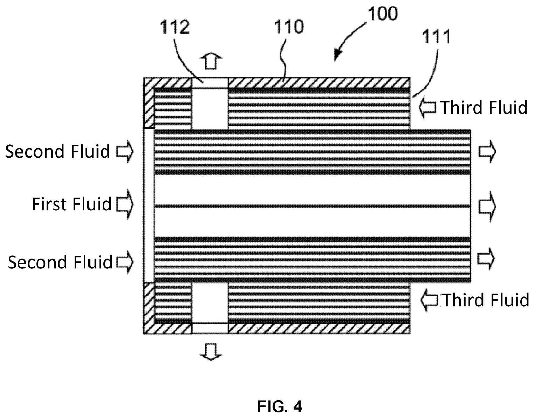

As shown in FIGS. 3 and 4, the heat exchanger according to Embodiment 1 of this invention can further include an outer cylindrical member 110 fitted to at least a part of the outer peripheral wall 10. The outer cylindrical member 110 has an inlet 111 and an outlet 112 for a fluid (third fluid). With such a structure, it is possible to protect the honeycomb structure 100. Further, particularly when the heat exchanger is used in a burner, mixing of the second fluid and the third fluid can be suppressed, so that it is possible to stably improve the heat exchange efficiency between the second fluid and the third fluid.

In addition, FIG. 3 is a cross-sectional view of the heat exchanger parallel to the extending direction of the cells 70a, 70b, 70c of the honeycomb structure 100, and shows an example in which an outer cylindrical member 110 is provided on the outer peripheral wall 10 of the honeycomb structure 100 of FIG. 1a. FIG. 4 is a cross-sectional view of the heat exchanger parallel to the extending direction of the cells 70a, 70b, 70c of the honeycomb structure 100, and shows an example in which an outer cylindrical member 110 is provided on the outer peripheral wall 10 of the honeycomb structure of FIG. 2.

The outer cylindrical member 110 is preferably longer than a length of the outer peripheral wall 10 in the axial direction X. By controlling the length of the outer cylindrical member 110 in this manner, a degree of freedom in installation of the inlet 111 and the outlet 112 for a fluid (third fluid) is improved. For example, as shown in FIG. 3, it is possible to install the outlet 112 for the third fluid at a position perpendicular to the flow direction of the third fluid.

As the outer cylindrical member 110, it is preferable to have heat resistance and corrosion resistance, and for example, a ceramic tube, a SUS tube, a copper tube, a brass tube, or the like can be used.

The outer cylindrical member 110 is preferably fitted to the honeycomb structure 100. As used herein, the term "fitted" means that members are fixed in a state of being suited to each other. Therefore, the fitting of the honeycomb structure 100 and the outer cylindrical member 110 encompasses cases where the honeycomb structure 100 and the outer cylindrical member 110 are fixed to each other by a fixing method based on fitting such as clearance fitting, interference fitting and shrinkage fitting, as well as by brazing, welding, diffusion bonding, or the like.

When a ceramic tube is used as the outer cylindrical member 110, it is preferable that the outer cylindrical member 110 and the honeycomb structure 100 are integrally formed. From a viewpoint of durability and reliability against thermal stress, it is preferable that the outer cylindrical member 110 and the honeycomb structure 100 are made of the same material or materials having similar thermal expansion coefficients.

An intermediate material made of a material having a lower Young's modulus than the outer cylindrical member 110 may be provided between the honeycomb structure 100 and the outer cylindrical member 110. By providing the intermediate material at such a position, it is possible to improve adhesion (sealing property) between the honeycomb structure 100 and the outer cylindrical member 110. Examples of the intermediate material include a heat insulating mat, a graphite sheet, and the like.

### (2) Burner

The burner according to Embodiment 1 of this invention mixes and combusts a fuel gas and air, and includes the heat exchanger according to Embodiment 1 of this invention, wherein the first fluid is the fuel gas, the second fluid is the air, and the third fluid is a combustion exhaust gas from the fuel gas and the air. Since the heat exchanger according to Embodiment 1 of this invention is excellent in heat resistance, it is possible to form a burner that can be applied to industrial furnaces used in a temperature range where the furnace internal temperature exceeds 1000°C. Further, since the heat exchanger according to Embodiment 1 of this invention is excellent in heat exchange efficiency between the second fluid (air) and the third fluid (combustion exhaust gas), it is possible to form a burner having high energy efficiency.

### <Embodiment 2>

### (1) Heat Exchanger

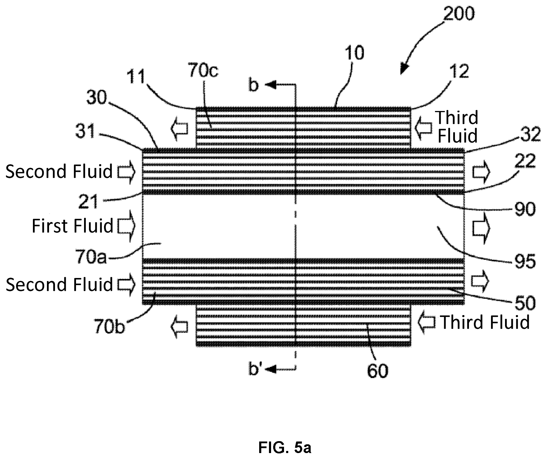

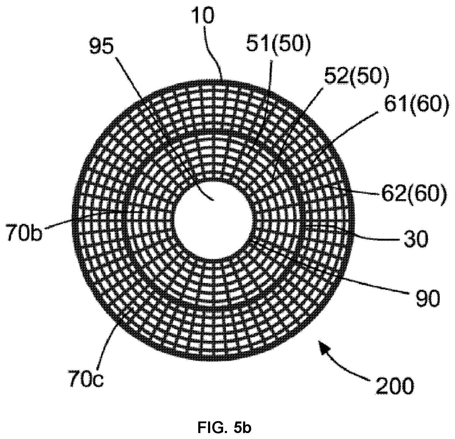

FIG. 5a is a cross-sectional view of a heat exchanger according to Embodiment 2 of this invention, the cross-sectional view being parallel to the extending direction of the cells of the honeycomb structure. FIG. 5b is a cross-sectional view taken along the line b-b' in FIG. 5a (a cross-sectional view of the heat exchanger perpendicular to the extending direction of the cells of the honeycomb structure).

As shown in FIGS. 5a and 5b, the heat exchanger according to Embodiment 2 of this invention is different from the heat exchanger according to Embodiment 1 of this invention in that the former includes a honeycomb structure 200 in which the first intermediate wall 20 is an inner peripheral wall 90 and an inner side of the inner peripheral wall 90 is a hollow region 95 that does not have the first partition wall 40. Other structures are the same as those of the heat exchanger according to Embodiment 1 of this invention, and therefore, descriptions thereof are omitted. Even when the honeycomb structure 200 having such a structure is used, heat is exchangeable between fluids flowing through the second flow path and the third flow path, and the heat exchange efficiency can be enhanced, so that it is possible to suitably use the honeycomb structure in burners.

The material and thickness of the inner peripheral wall 90 in the honeycomb structure 200 are not particularly limited, and can be the same as those of the first intermediate wall 20 in the honeycomb structure 100.

A method for producing the honeycomb structure 200 can also be performed in accordance with the method for producing the honeycomb structure 100. Specifically, when producing a honeycomb formed body, extrusion molding may be performed by selecting dies and jigs having appropriate forms such that the inner peripheral wall 90 is formed.

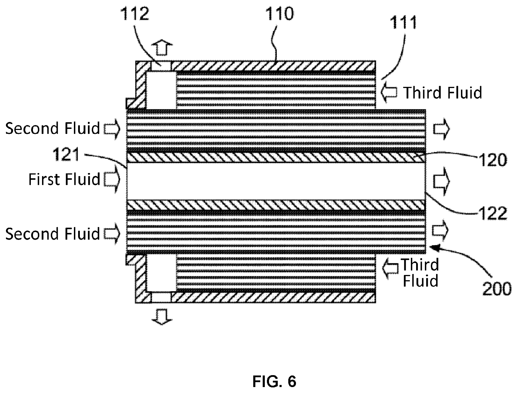

As shown in FIG. 6, the heat exchanger according to Embodiment 2 of this invention can further include an outer cylindrical member 110 fitted to at least a part of the outer peripheral wall 10, similarly to the heat exchanger according to Embodiment 1 of this invention.

The heat exchanger according to Embodiment 2 of this invention can further include an inner cylindrical member 120 fitted to at least a part of the inner peripheral wall 90. The inner cylindrical member 120 has an inlet 121 and an outlet 122 for a fluid (first fluid). By providing the inner cylindrical member 120, it is possible to easily feed the fluid (first fluid) into the honeycomb structure 200.

FIG. 6 is a cross-sectional view of the heat exchanger parallel to the extending direction of the cells 70a, 70b, 70c of the honeycomb structure 200, and shows an example in which an outer cylindrical member 110 is provided on the outer peripheral wall 10 and an inner cylindrical member 120 is provided on the inner peripheral wall 90 of the honeycomb structure 200 of FIG. 5a.

The inner cylindrical member 120 is preferably longer than a length of the inner peripheral wall 90 in the axial direction X. By controlling the length of the inner cylindrical member 120 in this manner, a degree of freedom in installation of the inlet 121 and the outlet 122 for the fluid (first fluid) is improved.

The material and the like of the inner cylindrical member 120 are not particularly limited, and can be the same material as the outer cylindrical member 110.

### (2) Burner

The burner according to Embodiment 2 of this invention mixes and combusts a fuel gas and air, and includes the heat exchanger according to Embodiment 2 of this invention, wherein the first fluid is the fuel gas, the second fluid is the air, and the third fluid is a combustion exhaust gas of the fuel gas and the air. Since the heat exchanger according to Embodiment 2 of this invention is excellent in heat resistance, it is possible to form a burner that can be applied to industrial furnaces used in a temperature range where the furnace internal temperature exceeds 1000°C. Further, since the heat exchanger according to Embodiment 2 of this invention is excellent in heat exchange efficiency between the second fluid (air) and the third fluid (combustion exhaust gas), it is possible to form a burner having high energy efficiency.

### <Embodiment 3>

### (1) Heat Exchanger

The heat exchanger according to Embodiment 3 of this invention is the same as the heat exchangers according to Embodiments 1 and 2 of this invention with the exception that types of fluids flowing through the respective flow paths are different.

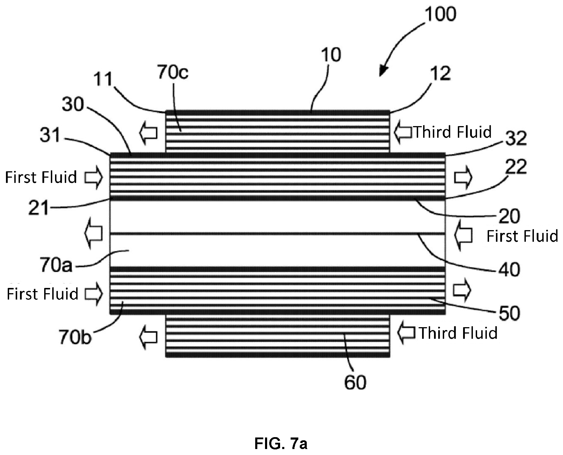

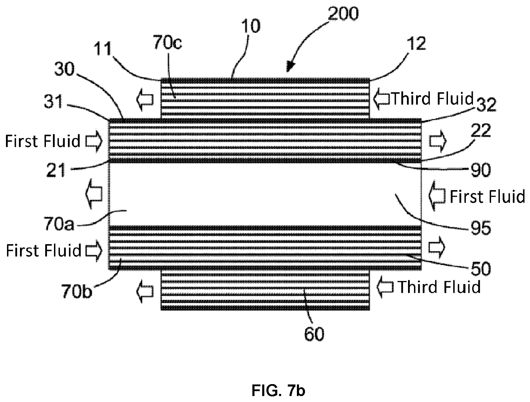

Here, cross-sectional views of the heat exchanger according to Embodiment 3 of this invention, parallel to the extending direction of the cells of the honeycomb structure, are shown in FIGS. 7a and 7b. Components of the heat exchanger according to Embodiment 3 of this invention are the same as those of the heat exchangers according to Embodiments 1 and 2 of this invention, and therefore, descriptions thereof are omitted.

As shown in FIGS. 7a and 7b, in the heat exchanger according to Embodiment 3 of this invention, the first flow path (cells 70a) and the second flow path (cells 70b) are flow paths for the first fluid, and the third flow path (cells 70c) is a flow path for the third fluid. By using the honeycomb structures 100, 200 having such a structure, heat is exchangeable between the first fluid and the third fluid, and the heat exchange efficiency can be enhanced, so that it is possible to suitably use the honeycomb structures for preheating fluid (for example, air) used in burners.

It is preferable that a flow direction of the first fluid flowing through the first flow path and a flow direction of the first fluid flowing through the second flow path are opposite to each other. With such a configuration, it is possible to cause the first fluid that has flowed through the second flow path to flow through the first flow path.

It is also preferable that a flow direction of the first fluid flowing through the second flow path and a flow direction of the third fluid flowing through the third flow path are opposite to each other. With such a configuration, it is possible to enhance the heat exchange efficiency between the first fluid flowing through the second flow path and the third fluid flowing through the third flow path.

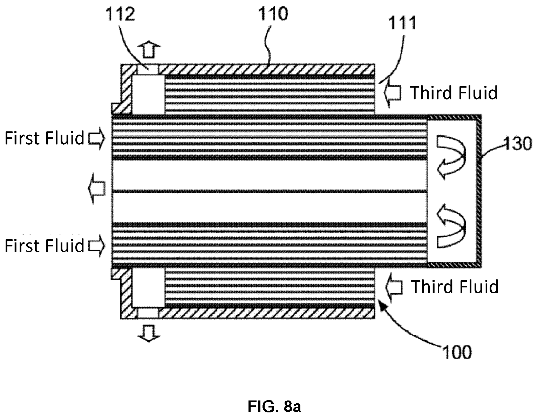

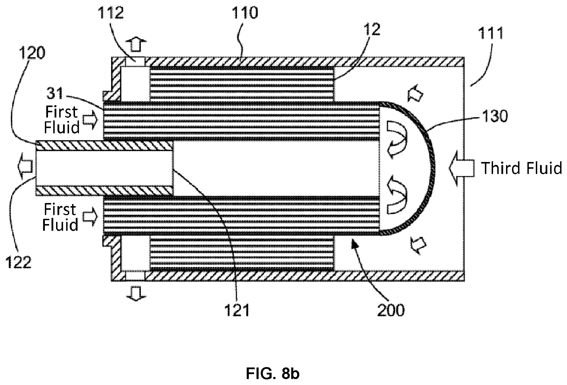

As shown in FIGS. 8a and 8b, the heat exchanger according to Embodiment 3 of this invention can further includes an outer cylindrical member 110 fitted to at least a part of the outer peripheral wall 10 of the honeycomb structure 100, 200. The outer cylindrical member 110 can have an inlet 111 and an outlet 112 for a fluid (third fluid). With such a structure, it is possible to protect the honeycomb structure 100, 200, and also to suppress mixing of the first fluid and the third fluid.

As shown in FIG. 8b, it is preferable that a position of the inlet 111 of the outer cylindrical member 110 extends more outward than an end portion 12 of the honeycomb structure 200. With such a structure, it becomes easier to feed the third fluid to the third flow path.

As shown in FIGS. 8a and 8b, the heat exchanger according to Embodiment 3 of this invention can further include a return member 130 provided on one end face of the honeycomb structure 100, 200 orthogonal to the extending direction of each cell, the return member 130 being configured to feed the first fluid flowing through the second flow path to the first flow path. Specifically, it is sufficient to provide the return member 130 on an outlet side of the second flow path through which the first fluid flows. By providing the return member 130 at such a position, it is possible to feed the first fluid flowing through the second flow path to the first flow path.

The structure of the return member 130 is not particularly limited as long as it has a structure capable of feeding the first fluid flowing through the second flow path to the first flow path. For example, in a cross section parallel to the extending direction of the cells of the honeycomb structure, it may be a U-shape as shown in FIG. 8a, or a semicircular shape as shown in FIG. 8b.

The material of the return member 130 is not particularly limited and may be the same material as the outer cylindrical member 110 or the inner cylindrical member 120, but it is preferable to use a high thermal conductivity material such as Si-impregnated SiC (in which pores of porous SiC are impregnated with metallic Si). By selecting a high thermal conductivity material, heat is exchangeable between the first fluid and the third fluid via the high thermal conductivity material, so that it is possible to enhance the heat exchange efficiency.

The method for disposing the return member 130 is not particularly limited, and a known method can be used. Examples of the known methods include, in addition to fixing methods by fitting such as clearance fitting, interference fitting, and shrink fitting, brazing, welding, diffusion bonding (including bonding by Si impregnation), and the like.

As shown in FIG. 8b, the heat exchanger according to Embodiment 3 of this invention can further include an inner cylindrical member 120 fitted to at least a part of the inner peripheral wall 90 of the honeycomb structure 200. The inner cylindrical member 120 has an inlet 121 and an outlet 122 for a fluid (first fluid).

It is preferable that a position of the outlet 122 of the inner cylindrical member 120 extends more outward than an end portion 31 of the honeycomb structure 200. With such a structure, it is possible to suppress mixing of the first fluid to be fed and the first fluid to be discharged.

It is also preferable that a position of the inlet 121 of the inner cylindrical member 120 is positioned closer to the end portion 31 side than an axial center of the honeycomb structure 200. With such a structure, it is possible to suppress heat exchange of the first fluid between the vicinity of the inlet of the second flow path and the vicinity of the outlet of the first flow path.

### (2) Burner

The burner according to Embodiment 3 of this invention mixes and combusts a fuel gas and air, and includes a heat exchanger according to Embodiment 3 of this invention, wherein the first fluid is the air, the third fluid is a combustion exhaust gas from the fuel gas and the air, and the heat exchanger is used for preheating the air. Since the heat exchanger according to Embodiment 3 of this invention is excellent in heat resistance, it is possible to form a burner that can be applied to industrial furnaces used in a temperature range where the furnace internal temperature exceeds 1000°C. Further, since the heat exchanger according to Embodiment 3 of this invention is excellent in heat exchange efficiency between the first fluid (air) and the third fluid (combustion exhaust gas), it is possible to effectively preheat the first fluid (air), and it is possible to form a burner having high energy efficiency.

### Description of Reference Numerals

10 outer peripheral wall
11, 12 end portion
20 first intermediate wall
21, 22 end portion
30 second intermediate wall
31, 32 end portion
40 first partition wall
50 second partition wall
51 circumferential partition wall
52 radial partition wall
60 third partition wall
61 circumferential partition wall
62 radial partition wall
70a, 70b, 70c cells
80 constricted portion
90 inner peripheral wall
95 hollow region
100, 200 honeycomb structure
110 outer cylindrical member
111 inlet
112 outlet
120 inner cylindrical member
121 inlet
122 outlet
130 return member

## Claims

1. A heat exchanger comprising a honeycomb structure having ceramics as a main component, the honeycomb structure comprising:
an outer peripheral wall;
a first intermediate wall and a second intermediate wall, each including a portion provided on an inner side of the outer peripheral wall;
a first partition wall provided on an inner side of the first intermediate wall, the first partition wall defining a plurality of cells to form a first flow path;
a second partition wall provided between the first intermediate wall and the second intermediate wall, the second partition wall defining a plurality of cells to form a second flow path; and
a third partition wall provided between the second intermediate wall and the outer peripheral wall, the third partition wall defining a plurality of cells to form a third flow path,
wherein the first flow path, the second flow path, and the third flow path are configured to be coaxially positioned.

2. The heat exchanger according to claim 1,
wherein the first flow path is a flow path for a first fluid, the second flow path is a flow path for a second fluid, and the third flow path is a flow path for a third fluid,
and heat is exchangeable between the second fluid and the third fluid.

3. The heat exchanger according to claim 1,
wherein the first flow path and the second flow path are flow paths for a first fluid, and the third flow path is a flow path for a third fluid,
and heat is exchangeable between the first fluid and the third fluid.

4. The heat exchanger according to any one of claim 1 to 3, wherein in an axial direction of the honeycomb structure, both end portions of the outer peripheral wall are positioned more inward than both end portions of the first intermediate wall and the second intermediate wall.

5. The heat exchanger according to any one of claims 1 to 3, wherein in a cross section perpendicular to an extending direction of the cells, the second partition wall and the third partition wall each have a circumferential partition wall extending in a circumferential direction and a radial partition wall extending in a radial direction.

6. The heat exchanger according to any one of claims 1 to 3, further comprising an outer cylindrical member fitted to at least a part of the outer peripheral wall, the outer cylindrical member having an inlet and an outlet for a fluid.

7. The heat exchanger according to any one of claims 1 to 3, wherein the first intermediate wall is an inner peripheral wall, and an inner side of the inner peripheral wall is a hollow region that does not have the first partition wall.

8. The heat exchanger according to claim 7, further comprising an inner cylindrical member fitted to at least a part of the inner peripheral wall, the inner cylindrical member having an inlet and an outlet for a fluid.

9. The heat exchanger according to claim 2, wherein a flow direction of the first fluid and a flow direction of the second fluid are opposite to a flow direction of the third fluid.

10. The heat exchanger according to claim 3, wherein a flow direction of the first fluid flowing through the first flow path and a flow direction of the first fluid flowing through the second flow path are opposite to each other.

11. The heat exchanger according to claim 10, wherein a flow direction of the first fluid flowing through the second flow path and a flow direction of the third fluid flowing through the third flow path are opposite to each other.

12. The heat exchanger according to claim 11, further comprising a return member provided on one end face of the honeycomb structure orthogonal to the extending direction of the cells, the return member being configured to feed the first fluid flowing through the second flow path to the first flow path.

13. The heat exchanger according to any one of claims 1 to 3, wherein the ceramics is silicon carbide.

14. A burner for mixing and combusting a fuel gas and air, the burner comprising:
the heat exchanger according to claim 2,
wherein the first fluid is the fuel gas, the second fluid is the air, and the third fluid is a combustion exhaust gas from the fuel gas and the air.

15. A burner for mixing and combusting a fuel gas and air, the burner comprising:
the heat exchanger according to claim 3,
wherein the first fluid is the air and the third fluid is a combustion exhaust gas from the fuel gas and the air,
and the heat exchanger is used for preheating the air.
